Europäisches Patentamt

European Patent Office

Office européen des brevets

(19)

(11) Veröffentlichungsnummer: **0 170 177**
**B1**

## (12) EUROPÄISCHE PATENTSCHRIFT

(45) Veröffentlichungstag der Patentschrift:
**21.09.88**

(21) Anmeldenummer: **85109097.7**

(22) Anmeldetag: **20.07.85**

(51) Int. Cl.⁴: **B 60 H 1/00**

(54) **Heiz- und/oder Klimaanlage für den Innenraum von Kraftfahrzeugen.**

(30) Priorität: **24.07.84 DE 3427292**

(43) Veröffentlichungstag der Anmeldung:
**05.02.86 Patentblatt 86/6**

(45) Bekanntmachung des Hinweises auf die Patenterteilung:
**21.09.88 Patentblatt 88/38**

(84) Benannte Vertragsstaaten:
**DE FR GB IT SE**

(56) Entgegenhaltungen:
**DE-A-2 757 651**
**DE-A-3 107 324**
**GB-A-2 093 983**
**JP-A-58 063 510**
**US-A-4 537 245**

**PATENTS ABSTRACTS OF JAPAN, Band 7, Nr. 112
(M-215) 1257 , 17. Mai 1983; & JP - A - 58 33 509
(NIPPON DENSO K.K.) 26.02.1983
PATENTS ABSTRACTS OF JAPAN, Band 9, Nr. 7 (M-
350) 1730 , 12. Januar 1985; & JP - A - 59 156 814
(NIPPON DENSO K.K.) 06.09.1984
PATENTS ABSTRACTS OF JAPAN, Band 7, Nr. 291
(M-265) 1436 , 27. Dezember 1983; & JP - A - 58 164 418
(NIPPON DENSO K.K.) 29.09.1983
PATENTS ABSTRACTS OF JAPAN, Band 7, Nr. 104
(M-212) 1249 , 06.05.1983; & JP - A - 58 26 617 (NIPPON
DENSO K.K.) 17.02.1983**

(73) Patentinhaber: **BAYERISCHE MOTOREN WERKE
Aktiengesellschaft, Postfach 40 02 40 Petuelring
130 - AJ- 36, D-8000 München 40 (DE)**

(72) Erfinder: **Andersen, Jürgen, Uranusstrasse 3,
D-8031 Gilching (DE)**
Erfinder: **Busch, Lothar, Frauwiesenweg 27, D-8031
Gilching (DE)**

(74) Vertreter: **Bücken, Helmut, Bayerische Motoren
Werke Aktiengesellschaft Postfach 40 02 40
Petuelring 130 - AJ- 30, D-8000 München 40 (DE)**

EP 0 170 177 B1

## Beschreibung

Die Erfindung bezieht sich auf eine Heiz- und/oder Klimaanlage für den Innenraum von Kraftfahrzeugen, insbesondere Personenkraftwagen, einer Bauart mit den Merkmalen gemäß dem Oberbegriff des Patentanspruches 1.

Eine bekannte Klimaanlage dieser Bauart (JP-A-58-63 510) weist eine für jede Fahrzeughälfte (rechts-links) getrennt steuerbare Temperaturregelung auf. Weiterhin sind die zu den einzelnen Luftaustrittsdüsen zugeordneten Luftströmsteuerorgane programmgesteuert in Abhängigkeit der eingestellten Temperatur ansteuerbar. Darüber hinaus können die einzelnen Lufteinström-Steuerorgane auch manuell angesteuert werden. Nachteilig ist hierbei, daß aufgrund der Vielzahl der Lufteinström-Steuerorgane deren Steuerung aufwendig und damit störanfällig ist.

Aufgabe der Erfindung ist es, ohne spürbare Komfortbeeinflussung die bekannte Anlage zu vereinfachen.

Zur Lösung dieser Aufgabe sieht die Erfindung bei einer Heiz- und/oder Klimaanlage einer Bauart mit den Merkmalen des Oberbegriffes vom Patentanspruch 1 die kennzeichnenden Merkmale des Patentanspruches 1 vor. Auf diese Weise kann der Fahrer allein durch die Wahl der gewünschten Temperatur auch die Luftström-Bedingungen an der für die Fahrsicherheit wichtigen Scheibenentfrostung für deren sämtliche Lufteinström-Steuerorgane mitbestimmen, die der jeweiligen Temperatur mittels der Programm-Steuerung der Luftström-Steuerorgane zugeordnet sind. Ein negativer Einfluß auf das Behaglichkeitsempfinden ist dadurch nicht gegeben.

Durch die Weiterbildung gemäß Patentanspruch 2 wird eine weitere Vereinfachung in der Steuerung der Lufteinström-Steuerorgane erzielt.

Um den Bauaufwand an Steuervorrichtungen der gesamten Heiz- und/oder Klimaanlage in vertretbaren Grenzen zu halten sind gemäß Patentanspruch 3 diejenigen Einstellungen von Steuerorganen, die auf Fahrer und Beifahrer keinen unmittelbaren Klimatisierungs-Einfluß bewirken, ausschließlich in Abhängigkeit von den fahrerseitigen Wählvorrichtungen beeinflußt.

In der Zeichnung ist ein Ausführungsbeispiel der Erfindung dargestellt. Es zeigen:

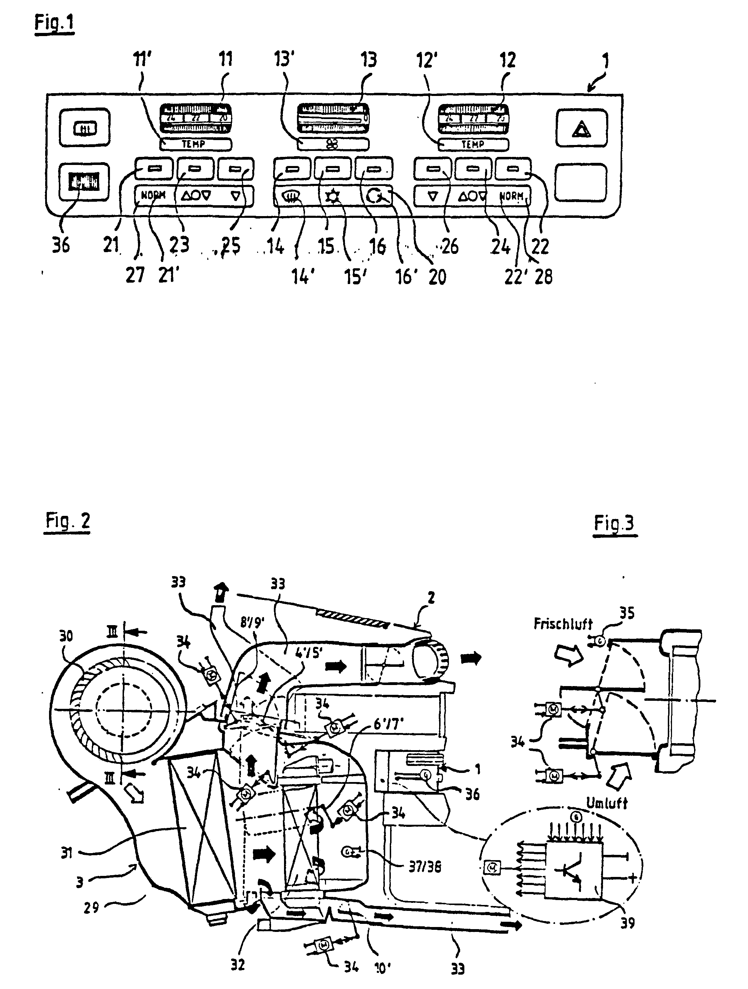

Fig. 1 ein Bedienteil für eine Heiz- und Klimaanlage für Kraftfahrzeuge,

Fig. 2 ein Heiz- und Klimagerät zum Bedienteil nach Fig. 1,

Fig. 3 einen Teilschnitt nach der Linie III-III in Fig. 2 im Bereich des Gebläse-Einlaufes,

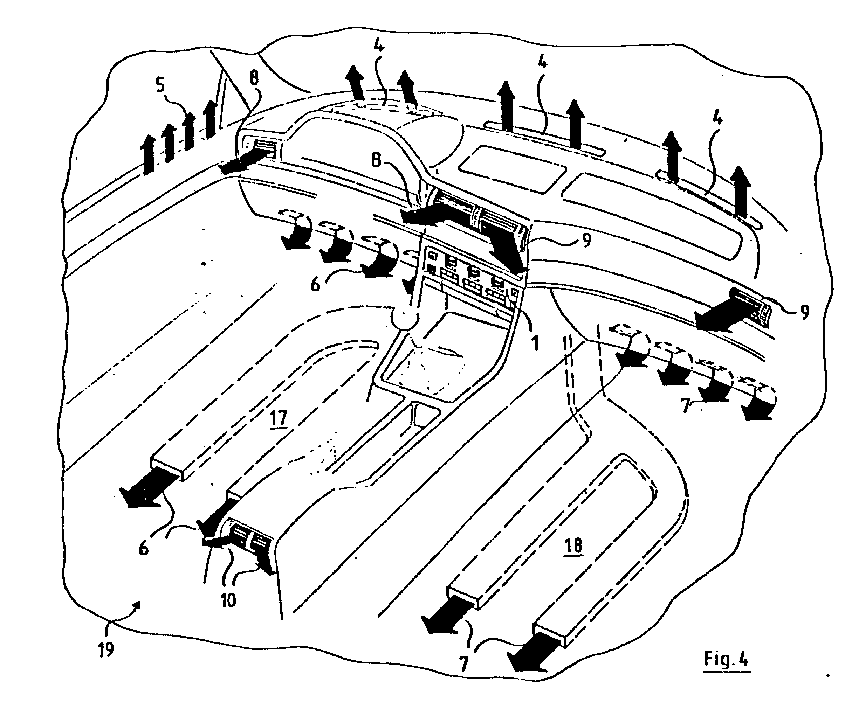

Fig. 4 eine Innenraum-Ansicht eines Personenkraftwagens mit den Lufteinström-Stellen der Heiz- und Kühlluft in den Fahrzeuginnenraum und

Fig. 5 einen Funktionsplan zur Helz- und Klimaanlage nach den Figuren 1 bis 4.

Ein Bedienteil 1 für eine Personenkraftwagen-Heiz- und -Klimaanlage 2 mit einem Heiz- und Klimagerät 3 und mehreren Heiz- und Kühlluft-Einströmöffnungen 4 bis 10 zum Frontscheiben-Entfrosten (4), Seitenscheiben-Entfrosten (5), Fußraum- und Fondraum-Fahrerseite (6), Fußraum- und Fondraum-Beifahrerseite (7), Belüften-Fahrerseite (8), Belüften-Fahrerseite (9) und Belüften-Fondraum (10) weist manuell betätigbare Wählvorrichtungen 11 bis 16 auf, die die Heiz- und/oder Kühlluft-Einstromung in ihrer Temperatur, Intensität und Verteilung bestimmen.

Für die Temperatur sind für die fahrerseitige Innenraum-Hälfte 17 und die beifahrerseitige Innenraumhälfte 18 des Personenkraftwagen-Innenraumes 19 je eine als Rändelrad mit Zahlenangabe in °C ausgebildete Temperatur-Wählvorrichtung 11 und 12 an den entsprechenden Außenbereichen des Bedienteiles 1 angeordnet. Mittig zwischen beiden Temperatur-Wählvorrichtungen 11 und 12 ist eine als weiteres Rändelrad mit Keildarstellung der Stellgröße ausgebildete Luftmengen-Wählvorrichtung 13 mit Gebläse-Leistungssteller eingebaut.

Den Wählvorrichtungen 11 bis 13 ist je ein darunter liegendes Anzeigefeld 11' bis 13' zugeordnet, mit Beschriftung "TEMP" bzw. einem Symbol für das Gebläse und mit Beleuchtung bei eingeschalteter Motor-Zündung und/oder Fahrzeugbeleuchtung.

Unter der für beide Innenraumseitenhälften 17 und 18 wirksamen Luftmengen-Wählvorrichtung 13 sind im gleichen Sinne wirksame Drucktasten 14, 15 und 16 als Wählvorrichtungen für Entfrosten (14), Kühlen (15) und Umluft-Betrieb (16) mit in einem darunter liegenden Anzeigefeld 20 zusammengefaßten, gleichfalls beleuchtbaren Symbolen 14' bis 16' angeordnet.

Unter den seitlichen Temperatur-Wählvorrichtungen 11 und 12 liegen jeweils 3 getrennt für die beiden Innenraum-Seitenhälften 17 und 18 wirksame weitere Drucktasten 21 bis 26 mit zugeordneten Anzeigefeldern 27 bzw. 28 und Symbolen 21' bis 26' als Wählvorrichtungen für die Einstellung der Lufteinström-Steuerorgane im und außerhalb des Heiz- und Klimagerätes 3. Beiderseits je eine äußere Drucktaste 21 und 22 mit Symbol-Beschriftung 21' bzw, 22' "NORM" schalten eine programm-gesteuerte Einstellung der Lufteinström-Steuerorgane ein, und zwar getrennt für beide Innenraum-Seitenhälften 17 und 18 in Abhängigkeit von der durch die mittleren Wählvorrichtungen 13 bis 16 bestimmten grundsätzlichen Betriebsart des Gerätes 3, nämlich Fördern von Heiz- oder Kühlluft mittels Luftmengen-Wählvorrichtung 13, Entfrosten, Kühlen bzw. Heizen mit Luftentfeuchten und Umluft mittels der Drucktasten 14, 15 und 16 und Belüften bzw. Heizen bei gelösten Drucktasten 14, 15 und 16 und je nach Umgebungstemperatur und Einstellung der Temperatur-Wählvorrichtungen 11 und 12.

Je eine mittlere und innere Drucktaste 23 und 24 bzw. 25 und 26 schaltet getrennt für jede Innenraumhälfte 17 und 18 die programmgemäße Einstellung der Lufteinström-Steuerorgane ab und bestimmt je eine Einstellung derselben, die gemäß den Symbolen 23' und 24' bzw. 25' und 26' einem vollständigen Öffnen der Lufteinström-Steuerorgane je Innenraumhälfte 17 und 18 zum Fußraum und Fondfußraum (6 bzw. 7) sowie zu den zusätzlich einzeln manuell einstellbaren Belüftungs-Einströmöffnungen 8 bzw. 9 durch die jeweils mittlere Drucktaste 23 bzw. 24 bzw. ausschließlich zum Fußraum und Fond-Fußraum (6 bzw. 7) durch die jeweils innere Drucktaste 25 bzw. 26 entsprechen.

Durch die der fahrerseitigen Innenraumhälfte 17 zugeordnete mittlere Drucktaste 23 werden zusätzlich auch die Lufteinström-Steuerorgane zum Front- und Seitenscheiben-Entfrosten (4 und 5) für eine größere Öffnungseinstellung gegenüber den programmgesteuerten Einstellungen beeinflußt, während diese Einstellungen von den inneren Drucktasten 25 und 26 und von der mittleren beifahrerseitigen Drucktaste 24 unbeeinflußt sind. Die mittlere und die innere fahrerseitigen Drucktasten 23 und 25 steuern ferner auch die Lufteinström-Steuerorgane für das Belüften-Fondraum (10) in der Weise an, daß dessen programmgesteuerte Einstellungen aufgehoben sind und mit der Drucktaste 23 ein volles Öffnen und mit der Drucktaste 25 ein vollständiges Schließen bewirkt wird. Zusätzlich sind die Lufteinströmöffnungen 10 zum Belüften-Fondraum (10) auch manuell in ihren Ausströmquerschnitten steuerbar.

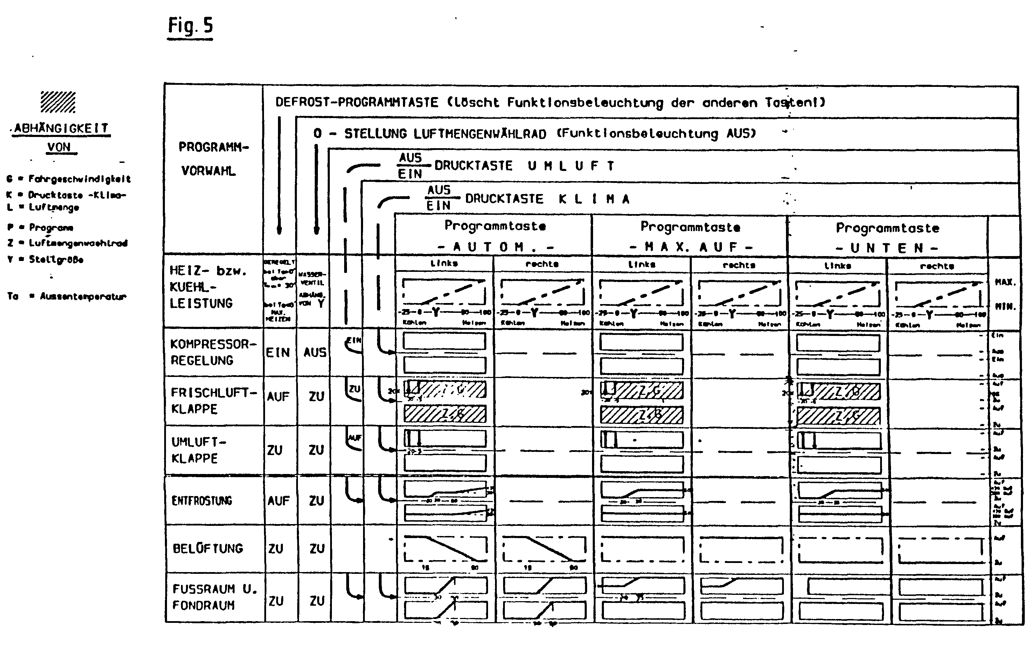

Eine Gesamtübersicht über die Steuerfunktionen der Klimaanlage 2 und deren Bedienungs- und Steuerelemente zeigt der Funktionsplan nach Fig. 5 in übersichtlicher Darstellung. Daraus sind auch die Steuereinflüsse der Heiz- und Kühlleistung "Y" ersichtlich, die mittels eines üblichen elektromagnetisch betätigten Wasserventiles bzw. der gleichfalls üblichen elektromagnetischen Kompressorregelung einerseits und in Abhängigkeit von der Differenz zwischen der jeweiligen Ist-Temperatur und der jeweils mit der Temperatur-Wählvorrichtungen 11 und 12 bestimmten Soll-Temperatur sich selbsttätig einstellt. Ferner sind durch schraffierte Einstellbereiche manuell wählbare Luftmengen- und Warm-/Kaltluft-Mischungs-Alternativen dargestellt, deren Detailfunktionen u. a. in Verbindung mit der Zeichnungs-Legende in Fig. 5 ersichtlich sind.

Zum Sicherstellen der vorstehend beschriebenen Funktionen enthält das Heiz- und Klimagerät 3 die üblichen Hauptbauteile, ein mehrteiliges Gehäuse 29, ein Luft-Gebläse 30, einen in einen nicht dargestellten Kältemittelkreis einbezogenen Verdampfer 31, einen in einen nicht dargestellten Brennkraftmaschinen-Kühlkreis einbezogenen Wärmetauscher 32, Luft-Kanäle, -Düsen und Steuerklappen 33, elektrische, pneumatische oder gleichwertig betätigte Stellmotoren 34, Außen-, Innenraum- und Kühlmittel-Temperatur-Sensoren 35, 36, 37-links und 38-rechts Temperatur-Stellwertgeber und elektrische Schalter zu den Drucktasten 21 bis 26 im Bedienteil 1.

Ein gleichfalls am Bedienteil 1 oder auch an anderer gut wartungs-zugängiger Innenraum-Stelle angeordnetes elektrisches und elektronisches Steuergerät 39 verknüpft die von den Gebern, Sensoren und Schaltern eingehenden Signalwerte und gibt programmgemäße Stellsignale auf die Stellmotoren 34, die die jeweiligen Einstellorgane in die entsprechenden für die fahrer- und beifahrerseitigen Innenraumhälften gleichen bzw. zum Teil unterschiedlichen Stellungen bringen.

Insgesamt ermöglicht die erfindungsgemäße Heiz- und Klimaanlage eine Klimatisierung eines Fahrzeug-Innenraumes, die auch stark unterschiedlichen Anforderungen von Fahrer und Beifahrer bezüglich ihrer Temperatur- und Luftzug-Empfindungen gerecht wird. Hierzu können Fahrer und Beifahrer durch unterschiedliches Einstellen der ihrer jeweiligen Innenraumhälfte 17 bzw. 18 zugeordneten Temperatur-Wählvorrichtungen 11 bzw. 12 entsprechend unterschiedliche programmgesteuerte Einstellungen der Lufteinströmorgane bewirken, die dem jeweils gewählten Temperaturwert angepaßt sind. Für außergewöhnliche Bedürfnisse und/oder Umweltbedingungen, wie z. B. bei starker seitlicher Sonneneinstrahlung, kann durch Betätigen einer oder je einer der Drucktasten 23 und 25 bzw. 24 und 26 die programmgemäße Einstellung übersteuert werden. Durch Betätigen der Drucktasten 22 bzw. 23 mit der Beschriftung "NORM" läßt sich die programmgemäße Einstellung wieder herstellen.

**Patentansprüche**

1. Heiz- und/oder Klimaanlage für den Innenraum von Kraftfahrzeugen, insbesondere Personenkraftwagen, mit einer für beide Innenraumhälften (17 und 18) getrennt manuell bedienbaren Temperatur-Wählvorrichtung (11 und 12) für die selbsttätige Temperaturregelung der in den Innenraum (19) einströmenden Heiz- bzw. Kühlluft und mit in Abhängigkeit von der gewählten Betriebsart (Entfrosten, Heizen und Kühlen) und von der Temperatur der in den Innenraum (19) einströmenden Heiz- oder Kühlluft bzw. von der jeweiligen Stellung der zugehörigen Temperatur-Wählvorrichtung (11 und 12) für jede Innenraum-Seitenhälfte (17 bzw. 18) getrennt programmgesteuerten Einstellungen von Lufteinströmorganen (4' - 10') für den Fußraum (6 und 7) Scheibenentfrostung (4 und 5) und Belüftung (8, 9 und 10), sowie weitere manuell bedienbare Einstellvorrichtungen (23 - 26) für die Lufteinström-Steuerorgane (4' - 10'),
dadurch gekennzeichnet, daß die Lufteinström-Steuerorgane (4' und 5') für die gesamte Entfrostung nur von der fahrerseitigen Wählvorrichtung (21 bzw. 23 bzw. 25) angesteuert werden.

2. Heiz- und/oder Klimaanlage nach Anspruch 1,
dadurch gekennzeichnet, daß weiterhin eine Fondraumbelüftung (10) vorgesehen ist, deren Lufteinström-Steuerorgane (10') von der fahrerseitigen Wählvorrichtung (21 bzw. 23 bzw. 25) angesteuert werden.

3. Heiz- und/oder Klimaanlage nach Anspruch 1 oder 2,
dadurch gekennzeichnet, daß die Einstellungen aller Entfroster-Lufteinström-Steuerorgane (4' und 5'), der Gebläseförderleistung (13), der Kompressorleistung (15), der Frischluft/Umluftwechselsteuerung 16 und/oder der Fondraumbelüftungsströmung (10) ausschließlich in Abhängigkeit von der fahrerseitigen Innenraum-Seitenhälfte (17) zugeordneten Temperatur-Wählvorrichtung (11) programmgesteuert und/oder Einstell-Wählvorrichtung (23 und 25) festgelegt sind.

## Claims

1. A heating- and/or air-conditioning installation for the interior of motor vehicles, especially passenger cars, with a temperature-selecting device (11 and 12), which is manually operable separately for the two halves (17 and 18) of the interior, for the automatic temperature regulation of the heating or cooling air respectively flowing into the interior (19), and with air-inflow members (4' - 10') the settings of which are programme-controlled separately for each half side (17 or 18 respectively) of the interior in dependence upon the selected type of operation (defrosting, heating and cooling) and upon the temperature of the heating or cooling air flowing into the interior (19) or, respectively, upon the respective setting of the associated temperature-selecting device (11 and 12) for each half side (17 or 18 respectively) of the interior in respect of the foot space (6 and 7), window defrosting (4 and 5) and ventilation (8, 9 and 10), there being also further manually-operable setting devices (23 - 26) for the air-inflow control members (4' - 10'), characterised in that the air-inflow control members (4' and 5') for complete defrosting are controlled solely by the selecting device (21, 23 or 25 respectively) on the driver's side.

2. A heating- and/or air-conditioning installation according to claim 1, characterised in that, additionally, rear area ventilation means (10) are provided, the air-inflow control member (10') of which are controlled by the selector device (21, 23 or 25 respectively) on the driver's side.

3. A heating- and/or air-conditioning installation according to claim 1 or 2, characterised in that the settings of all defroster air-inflow-control members (4' and 5'), the output of the fan (13), the output of the compressor (15), the fresh air/return air exchange control (16) and/or of the rear area ventilation flow means (10) are exclusively programme-controlled in dependence upon the temperature-selecting device (11) associated with the half side (17) of the interior on the driver's side and/or are determined by the setting-selecting device (23 and 25).

## Revendications

1. Dispositif de chauffage et/ou de climatisation d'espace intérieur de véhicules automobiles tels qu'en particulier des voitures particulières, comportant des équipements de sélection de température (11 et 12) manoeuvrables manuellement et séparément pour les deux moitiés d'espace intérieur (17 et 18) de manière à réguler automatiquement la température de l'air de chauffage ou de refroidissement admis, en fonction du mode de fonctionnement choisi (dégivrage, chauffage et refroidissement), et la température de l'air de chauffage ou de refroidissement admis dans l'enceinte intérieure (19) pour effectuer respectivement les réglages programmés séparément de chaque position de l'équipement de sélection de température correspondant (11 et 12) pour chaque moitié latérale d'espace intérieur (17 et 18), ces réglages concernant les organes d'admission d'air (4' - 10') pour l'espace des pieds (6 et 7), le dégivrage des vitres (4 et 5) et l'aération (8, 9, 10), ainsi que d'autres équipements de réglage manoeuvrables manuellement (23 - 26), pour les organes de commande d'admission d'air (4'- 10'), dispositif de chauffage caractérisé en ce que les organes de commande d'admission d'air (4' et 5') ne sont commandés, pour l'ensemble de dégivrage qu'à partir de l'équipement de sélection situé du côté du conducteur (respectivement 21, 23 et 25).

2. Dispositif de chauffage et/ou de climatisation selon la revendication 1, caractérisé en ce qu'on prévoit en outre une aération d'espace arrière (10), dont les organes de commande d'admission d'air (10') sont commandés par l'équipement de sélection situé du côté du conducteur (respectivement 21, 23 et 25).

3. Dispositif de chauffage et/ou de climatisation selon l'une quelconque des revendications 1 et 2, caractérisé en ce que les réglages de tous les organes de commande de l'admission d'air de dégivrage (4' et 5'), de la puissance de refoulement de la soufflerie (13), de la puissance du compresseur (15), de l'aération par recyclage d'air (16), et/ou de l'écoulement d'aération arrière (10), sont exclusivement déterminés par l'équipement de sélection de temperature (11) affecté à la moitié d'espace intérieur latérale (17) située du côté du conducteur, et commandé par un programme et/ou par l'équipement de sélection de réglage (23 et 25).

Fig.1

Fig. 2

Fig.3

Frischluft

Umluft

1

Fig.4

0170177

3

# Fig. 5

0170177

**ABHÄNGIGKEIT VON**

G = Fahrgeschwindigkeit
K = Drucktaste -Klima-
L = Luftmenge
P = Programm
Z = Luftmengenwaehlrad
Y = Stellgröße

Ta = Aussentemperatur

| PROGRAMM-VORWAHL | | | | DEFROST-PROGRAMMTASTE (löscht Funktionsbeleuchtung der anderen Tasten!) | | | | | |
|---|---|---|---|---|---|---|---|---|---|
| | | | | 0 - STELLUNG LUFTMENGENWÄHLRAD (Funktionsbeleuchtung AUS) | | | | | |
| | | | | AUS/EIN -DRUCKTASTE U M L U F T | | | | | |
| | | | | AUS/EIN DRUCKTASTE K L I M A | | | | | |
| | | | | Programmtaste -AUTOM.- | | Programmtaste -MAX. AUF- | | Programmtaste -UNTEN- | |
| | | | | Links | rechts | Links | rechts | Links | rechts |
| HEIZ- bzw. KUEHL-LEISTUNG | | | | | | | | | MAX. MIN. |
| KOMPRESSOR-REGELUNG | EIN | AUS | EIN | | | | | | |
| FRISCHLUFT-KLAPPE | AUF | ZU | ZU | | | | | | |
| UMLUFT-KLAPPE | ZU | ZU | AUF | | | | | | |
| ENTFROSTUNG | AUF | ZU | | | | | | | |
| BELÜFTUNG | ZU | ZU | | | | | | | |
| FUSSRAUM U. FONDRAUM | ZU | ZU | | | | | | | |